# EUROPEAN PATENT APPLICATION

(11) **EP 1 120 519 A2**
(43) Date of publication of application: **01.08.2001**
(21) Application number: 01200267.1
(22) Date of filing: 25.01.2001
(51) Int. Cl.: E05B 65/16, E05C 9/08, B60J 5/00, B60J 10/08

(54) **Loading space with door, and vehicle provided with such loading space**

(30) Priority: 28.01.2000 NL 1014220
(71) Applicant: REYNOLDS ALUMINIUM HOLLAND B.V., NL-3846 BX Harderwijk (NL)
(72) Inventor: Gijsbers, Erik Hendrik, 8253 AD Dronten (NL)
(74) Representative: Prins, Adrianus Willem

(57) **Abstract**

Loading space (4), in particular for a vehicle, provided with a door (6) for closing off an opening (22) in a wall (2) of the loading space, in which on at least one side of the opening a post (24) is provided with a first flange (38) extending at least in the direction of the opening (22), while, with the door in closed position, a sealing profile (42) is received between the door (6) and a first side, directed towards the door, of the first flange (38), the door (6) being provided with at least one closing bolt (44) which engages from the door along said first flange (38) and the sealing profile (42) on the side of the first flange (38) facing away from said sealing profile (42).

## Description

The invention relates to a loading space, provided with a door. The invention particularly relates to such a loading space for or of a vehicle. Such a loading space is known from practice and is used, for instance, in vans, passenger cars and trucks. In this description, a loading space is meant to be at least a space which can be closed by a door, in which space persons or goods are or can be received.

With the known loading space, such as, for instance, of a truck, a door is used for closing off an opening in a wall of the loading space. It is known, then, to provide the door on the outside with closing means. To that end, for instance, the door is provided with a swiveling bracket, which engages a fixed part of a gripping element provided on the wall, with which the door can be fixed in a closed position. The door is provided, on edge surfaces extending approximately at right angles to the outer surface of the wall, with flexible sealing rubbers, which, when the door is closed, are somewhat compressed against adjacent wall surfaces. This manner of sealing is not particularly advantageous, since the sealing rubbers are compressed in an unfavorable direction and, moreover, the closing means extend against the outside of the door and thus entail an increase of air resistance, while, additionally, the danger exists that the closing means lead to damage to the surroundings or to people.

Further, doors of loading spaces are known in which, in the door, a crank is provided for moving a lock bolt which engages in an adjacent post. To that end, along an edge of the side of the door facing the loading space, a sealing profile extends which can abut against a flange extending parallel to the wall around the opening of the door, whereby, on a hinge side of the door the sealing rubbers are provided such that, when the door is closed, they are locked between an end surface of the door where the hinges are fixed and the adjacent post. However, this has as a disadvantage that the sealing rubbers are in different planes, and a suboptimal sealing is obtained.

An object of the invention is to provide a loading space with a door for closing off an opening in a wall of the loading space, which is simple in construction and durable in use. A further object of the invention is to provide such a loading space whose door seals well in closed position and where sealing means are provided which are favorably positioned and which preferably extend around the door and/or the opening.

According to the invention, these and further objectives are achieved with a loading space according to claim 1.

With a loading space according to the invention, a flange is provided which extends along at least a part of the opening, whereby a sealing profile is provided on a first side of the flange and the closing bolt can engage on the opposite side. Thus, a particularly simple closure is obtained, whereby, at the location of the closing bolt, the or each sealing profile can be uninterrupted, thus yielding a good sealing. As the at least one closing bolt engages on the side of the first flange facing away from the door, the door with the closing bolt can simply be pulled against the flange, whereby the sealing profile is compressed against the flange mentioned. A sealing profile can be provided both on the door and on the post, or on both.

The first flange mentioned preferably extends around the entire opening, so that a sealing profile fitting around the opening can be provided in a simple manner. The or each sealing profile can then be provided on all sides of the door/and or the opening on comparable surfaces.

In a particularly advantageous embodiment, a loading space according to the invention is further characterized by the features according to claim 3.

By providing the door with an edge profile having a second flange extending outwardly, such that between the first and second flange the or each sealing profile can be received and be somewhat compressed, a good sealing can be obtained in a still better and simpler manner, with the door in closed position. In such case, it is preferred that at least the first flange on the side facing the door includes an angle with the surface of the wall, in particular such that it extends from the wall towards the inner space in an inclining manner. Thus, in a simple manner, a surface can be created on which a sealing profile can be applied which extends around the entire opening, at least around the entire door as one, closed profile, while, in a simple manner, a suitable surface of sealing can be created, at least be chosen. Additionally, the advantage is thus obtained that the door in the closed position is at least partly supported by the flanges, cooperating with the sealing profile received between them. Furthermore, this creates the possibility of using a relatively large surface for sealing against the sealing profile. It further offers the possibility of using identical or at least corresponding profiles around the door and/or around the opening, while the or each sealing profile can be positioned in corresponding planes on all sides of the door /and or the opening.

With the door closed, the first and second flange preferably extend at least substantially parallel to each other, thus yielding an even better closure. Then, the second flange preferably extends, as does the first flange, around approximately the entire circumference of the door, such that a complete surface of contact for the or each sealing profile is obtained.

In further elaboration, a loading space according to the invention is further characterized by the features according to claim 7.

With such a loading space, the advantage is achieved that operating means for the at least one closing bolt can simply be provided in the door and can be operated, so that hardly any parts projecting outside the wall are obtained. With further closing bolts, these can be simply rotated together for obtaining a good closure or release of the door. With the or each closing bolt the door can be firmly pulled shut.

Preferably, the edges of the door and/or the posts which surround the opening are formed by profile parts, so that a simple construction is obtained. The profile parts are preferably manufactured by extrusion, which enables a simple and relatively inexpensive manufacture.

The invention further relates to a door for use in a loading space according to the invention, characterized by the features according to claim 12.

Additionally, the invention relates to a vehicle, characterized by the features according to claim 13.

In the subclaims, further advantageous embodiments of a loading space according to the invention are described.

In clarification of the invention, exemplary embodiments of a loading space, door and vehicle will be further described on the basis of the drawing. In the drawing:
Fig. 1 shows in perspective view a horizontal cross section of a part of a wall of a loading space with a door in closed position incorporated therein;
Fig. 2 shows in perspective view a vertical cross section along the line II-II of Fig. 1;
Fig. 3 shows a part of a wall with a door according to Fig. 1, as viewed from the inside of the loading space;
Fig. 4 shows a schematic sectional top plan view of a wall part with a door as shown in Fig. 1;
Fig. 5 shows, in enlargement, a part of a post and a door with closing mechanism as shown in Fig. 4;
Fig. 6 shows in assembled and in exploded condition a corner part of a post in which a door can be received; and
Fig. 7 shows, in sectional top plan view, an alternative embodiment of a post with an edge profile of a door and closing bolt incorporated therein.

In this description, identical or corresponding parts have identical or corresponding reference numerals.

In all exemplary embodiments shown a swinging door for closing off the loading space is taken as a starting point. Nonetheless, doors for loading spaces according to the invention can also be designed differently, for instance as sliding or swing-up doors, detachable door panels and the like. In the embodiment shown, at least the wall, the roof (not shown) and the door are composed of panels, surrounded by extrusion profiles. It will be clear, however, that these can also be designed differently, for instance as integrated wall and profile parts, sandwich panels and the like.

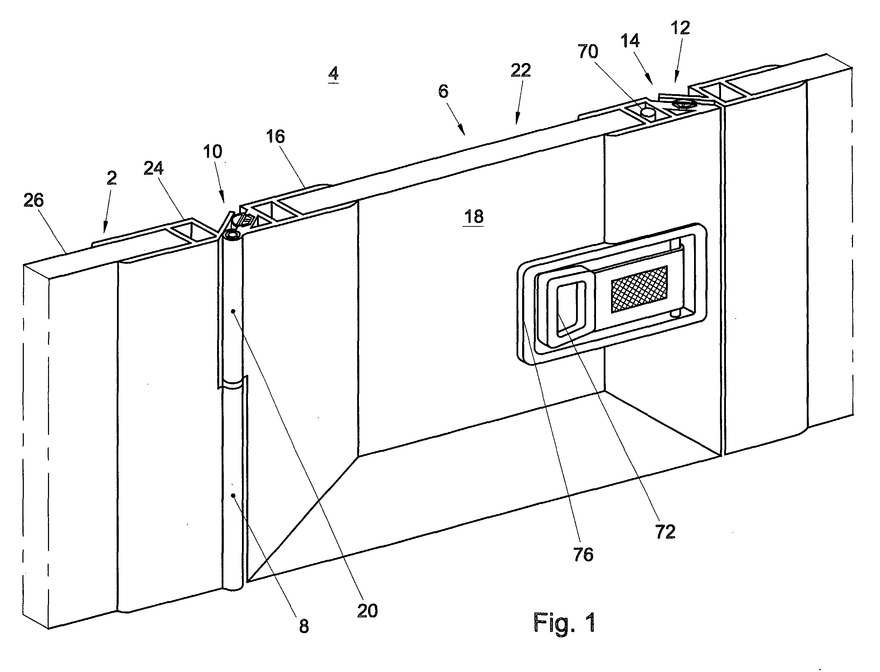

Fig. 1 shows, in a horizontally sectioned, perspective view a part of a wall 2 of a loading space 4. In Fig. 1, the wall 2 is viewed from the outside. In the wall 2, a door 6 is incorporated which, through hinges 8 on a first side 10, is pivotally connected to the wall 2. On the opposite, second side 12, closing means 14 are provided with which the door 6 can be fixed in a closed position. The closing means 4 will be further elucidated.

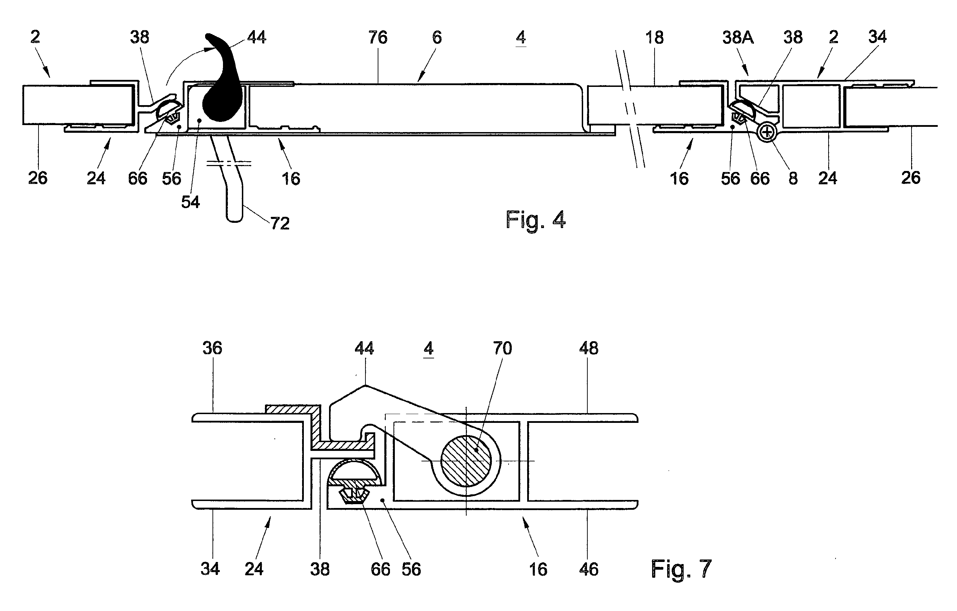

The door 6 is composed of four mitered, interconnected extrusion profiles 16, of, for instance, aluminum, which extrusion profiles 16 can have an identical or at least comparable cross section, for instance as further shown in Figs. 4, 5 or 7. The four extrusion profiles 16 form a rectangular frame in which a door panel 18 is retained. The extrusion profile 16 on the first side 10 can deviate from the other profiles, to the extent that hinge parts 20 have been co-extruded therein, while, for forming the desired hinge parts 20 parts of the profile 16 have been removed, for instance by sawing, milling or the like. For that matter, hinges can evidently be fixed onto the door and/or the wall at a later stage.

In the wall 2, an opening 22 is formed, in which the door 6 can be fittingly received. The opening 22 is substantially rectangular and bounded on all sides by posts 24. The posts 24 are preferably also extruded, for instance from aluminum and have, for instance, a cross section as is shown in Figs. 4, 5 or 7. The posts 24 are slid onto wall panels 26 which, at least for the main part, form the remainder of the closed wall 2. The door panels 18 and wall panels 26 can, for instance, be made of plastic, they can be sandwich panels of a nature known per se or be formed in a different way, suitable for forming closed panels. Variations thereon will be directly clear to the skilled person.

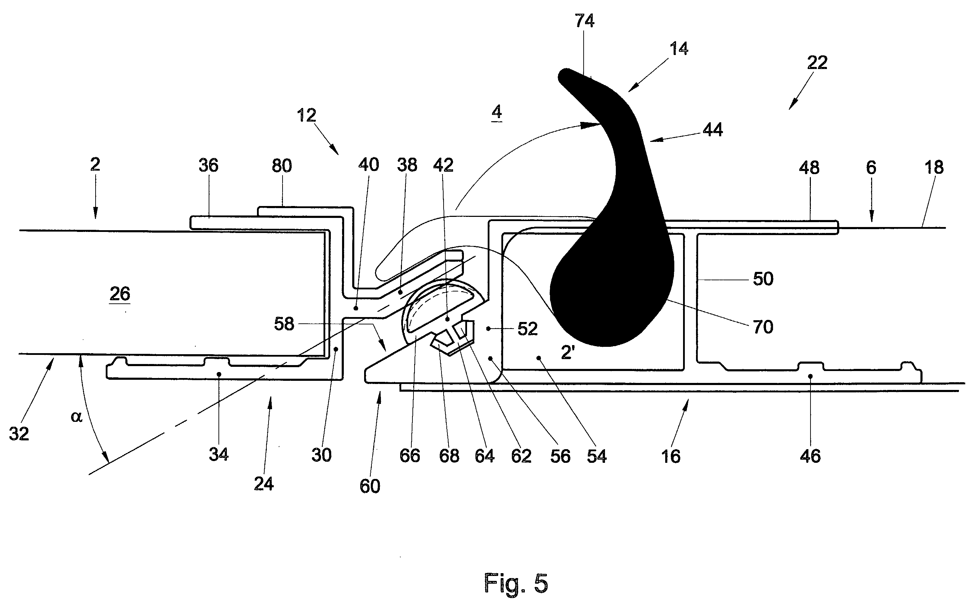

In Fig. 5, a part of a wall 2 with a post 24 is shown, situated on the second side 12, together with a part of the door 6 with an edge profile 16 and, schematically, a part of the closing means 14 as enlargement of a part of the cross section as shown in Fig. 4. The post 24 comprises a back 30, which extends approximately at right angles to the outer surface 32 of the wall 2, and is connected, on the side facing outwards, to a first wall profile part 34 and on the opposite side to a second wall profile part 36. The two wall profile parts 34, 36 extend approximately parallel to each other in the direction facing away from the door 6, a wall panel 26 being clamped between said wall profile parts 34, 36. A first flange 38 extends from approximately the center of the back 30, in the direction facing away from the wall panel 26, i.e. into the opening 22. The first flange comprises a short first part 40 which extends approximately parallel to the wall profile parts 34, 36, while the largest part of the first flange 38 includes an angle α with the outer surface 32 of the wall 2, at least with the wall profile parts 34, 36 mentioned. Therefore, the first flange 38 inclines substantially in the direction of the loading space 4. In the embodiment shown, the angle α is about 30°. More generally, the angle α in the embodiment shown is preferably between approximately 10° and approximately 80°, more in particular between 20° and 60°, while particularly good results are achieved between approximately 25° and approximately 50°. However, other angles can also be used.

The first flange 38 extends along the full length of the posts 24 and forms, on the one hand, a stop surface for a sealing profile 42 to be further described and, on the other hand, a stop surface for closing bolts 44 of the closing means 14, as will be further described.

The door profile 16 as shown in Fig. 5 comprises a first door profile part 46 and a second door profile part 48, which extend parallel to each other and, when the door 6 is closed, approximately parallel to the first and second wall profile part 34, 36. It will be clear, however, that various different customary, whether or not hollow, closing profiles can be used. The first and second door profile part 46, 48 are interconnected by first and second connecting wall parts 50, 52, respectively, extending at right angles thereto. The door panel 18 is clamped between the first and the second door profile part 46, 48 and is in contact with the first connecting wall part 50. On the side facing away from the door panel 18, at a distance from the first connecting door part 50, the second connecting part 52 is situated, with a chamber 54 therebetween. On the side of the second connecting wall part 52 facing away from the chamber 54, the profile 16 is provided with a nose part in the form of a second flange 56, which flange 56 has a somewhat triangular cross section, whose hypotenuse forms an inclining surface 58, which surface, when the door is closed, extends approximately parallel to the inclining part of the first flange 38. The base 60 of the second flange 56 extends approximately parallel to the outer side of the door 6. In the surface 58, a groove 62 is provided with undercuts, in which groove 62 a foot 64 of a sealing profile 66 is fixed with the aid of two outwardly biassed lips 68. The sealing profile 66 has a hollow, semicircular cross section whose convex side is directed towards the first flange 38 and which is compressed when the door is closed. In Fig. 5, the sealing profile is shown in continuous lines in an undeformed position and in deformed position in broken lines. It will be clear that with the deformed sealing profile a good closing pressure is obtained and thus a good closure.

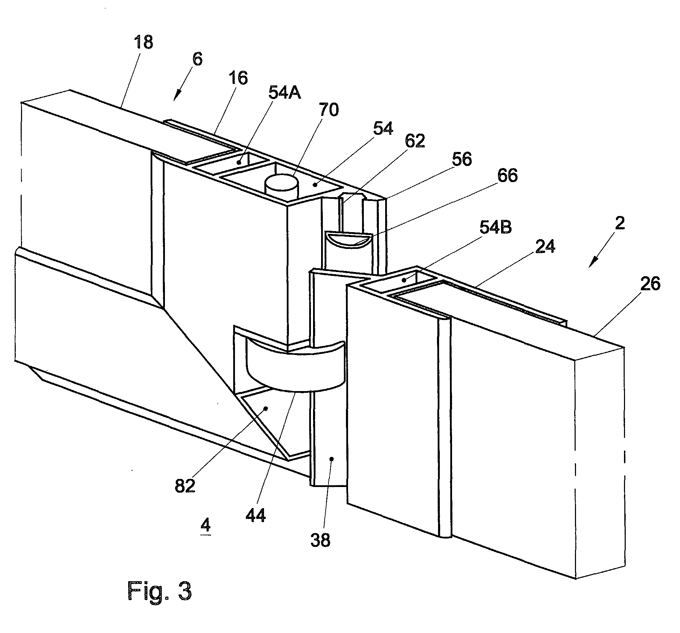

As is partly visible in Figs. 1 and 3, an operating rod 70 extends through the chamber 54, which, with the help of a handle 72, engageable from the outside of the door, is rotatable about its longitudinal axis. Transmission mechanisms to this end are sufficiently known from practice and not represented in detail. On the operating rod 70, a number of closing bolts 44 are mounted, which, preferably, cannot move relative to the operating rod 70. Each closing bolt 44 has a slightly curved arm 74 which, in a first position, extends substantially at right angles to the surface of the door 6 inwards into the loading space 4 (opened position; in Fig. 5 shown filled-in) and a second position (closed position; in Fig. 5 shown in thin lines), the curved arm 74 with its end engaging the side of the first flange 38 facing away from the sealing profile 66, at least the second flange 56. In the above-mentioned, second, closed position, the handle 72 lies within a cavity in the door 6 formed by a tray element 76. The handle is biassed into this position, for example by an eccentric mechanism, a spring mechanism or different technique known per se. The dimensions of the closing bolts 44, the first flange 38, the sealing profile 66 and the second flange 56 are chosen at least such that, with the or each closing bolt 44 in the closed position, the sealing profile 66 is compressed between the first flange 38 and the second flange 56 to at least the position represented in broken lines. The closing bolt 44 is substantially received between the inner and the outer plane of the door 6, at least the wall 2. This means that optimal dimensions within the loading space are maintained.

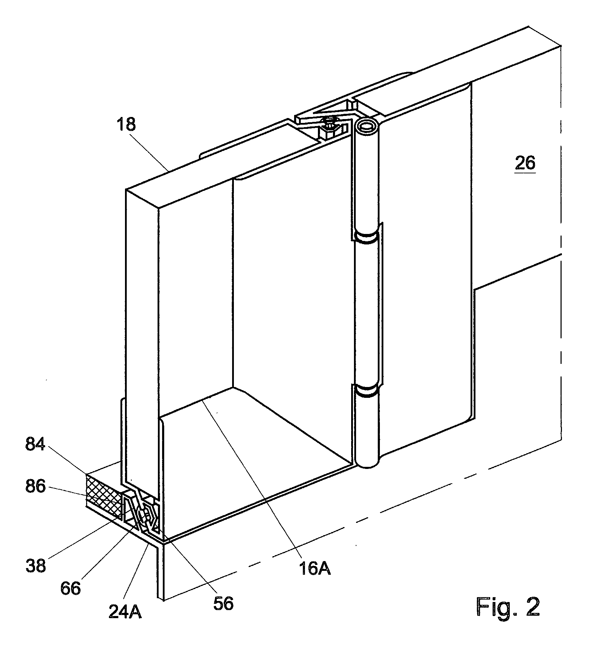

As is clear from Fig. 2, the threshold profile 24A and the lower door profile 16A are also provided with a first flange 38 and a second flange 56, respectively, with an intermediate sealing profile 66. As a result of the gradient of the flanges 38, 56, at least part of the weight of the door 6 can be supported by the flanges 38, 56 and the profile 66. Furthermore, the position of the flanges, which is, in principle, approximately the same on all sides of the door 6 and the opening 22 relative with regard to the plane of the door, offers the advantage that the sealing profile can extend without interruptions around the whole door 6, so that a particularly good sealing is obtained, while the door can be swung open easily without undesired sliding off of the sealing profile along the posts or profiles. Through this, the quality of the sealing profile 66 is maintained for a long time.

In the embodiment shown in Fig. 5, an extra profile 80 is provided on the side turned towards the inner space 4, of at least the first flange 38, for protection and possible reinforcement of the first flange 38. This extra profile 80 can, for instance, be made of steel and extend over only a limited height, at the location of the or each closing bolt 44 or over the full height.

In Fig. 3. a part of the door 6 and the wall 2 is represented, as viewed from the inner space of the loading space 4, a recess 82 being clearly shown in which the closing bolt 44 can rotate, so as to be able to engage behind the first flange 38 with the door in closed position. In the embodiment shown in Fig. 3, in the profile 16 and the post 24, extra chambers 54A, 54B, respectively, are provided, with associated wall parts, whereby a further stiffening of the extrusion profiles is obtained. As is clear, no recesses or other interruptions need to be provided in the posts for the hinges or closing bolts.

In Fig. 2 it is shown that a floor panel 84 can be simply pushed against the first flange 38. In this embodiment, the first flange is somewhat trapezium-shaped, at least provided with an end wall 86, for further stiffening of the profile mentioned. It will be clear that many variations hereon are possible, for instance also solid.

In Fig. 4 a horizontal cross section is shown of a part of a wall with a closed door 6 therein, with the closing bolt 44 in the opened position, at the location of the handle 72 and the tray element 76. In this embodiment, the post 24 on the hinge side is provided with a first flange 38A, which is tubular with an inclining surface 38 corresponding to the first flange 38 described earlier, which is connected, on the side facing the inner space 4, to a lengthened part of the first wall profile part 34. Thus, further stiffening of the post 24 is obtained. In this embodiment, for that matter, the first flange 38A can also extend around approximately the entire opening 22, while recesses can be provided for the closing bolt 44. Naturally, the closing bolt 44 can also abut against the first wall profile part 34 mentioned, at least the lengthened part thereof in the closed condition.

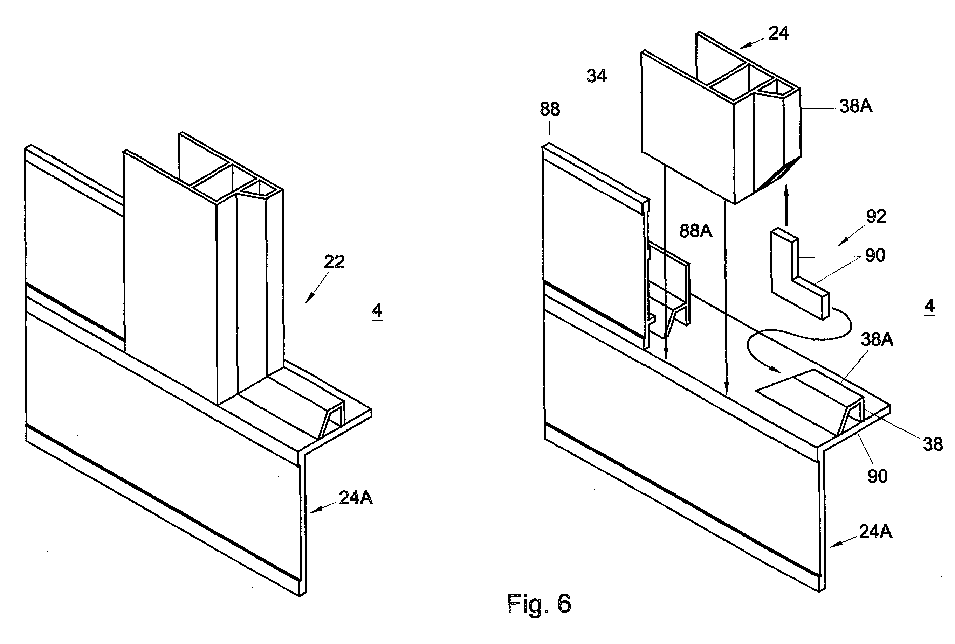

In Fig. 6, a simple solution is shown for coupling a horizontal post or threshold with a vertical post 24. In this embodiment, with Fig. 6 representing the coupled condition on the left side and the uncoupled condition on the right side, the horizontal post or threshold 24A is provided with a vertically extending wall profile part 88. having, approximately in the middle at right angles thereto, a floor profile part 90 extending horizontally and in the direction of the inner space 4. On the wall profile part 90, on the upper side, a tubular first flange 38A is arranged, comparable to the one shown in Fig. 4 on the hinge side. Additionally, an inclining end surface is provided as counter surface for a closing profile 66, while the flange 38A, on the side facing away, with a crude post 24A, is provided with a second wall profile part 88A, parallel to the wall profile part 88. Between these two wall profile parts 88, 88A, again a panel 26 for the wall 2 can be received. At the location of the opening 22, the part of the wall profile part 88, as well as of the second wall profile part 88A, which extends above the horizontal profile part 90 is removed as well as a part of the first flange 38A, which is mitered such that a post 24, shortened in a corresponding manner can be positioned/placed at right angles to the horizontal profile part 90, which post 24 is for instance designed as is shown in Figs. 1 or 5. The first wall profile part 34, facing outwards, then fits to the remaining part of the wall profile part 88, while the likewise tubular first flange 38A of the post 24 fits to the first flange 38A of the horizontal post 24A. In both tubular first flanges 38A mentioned, in each case a leg 90 of a knee-shaped element 92 is slipped, thereby creating a simple coupling, while maintaining a continuing first flange 38A.

In Fig. 7, an alternative embodiment of a post 24 and a profile 16 for a door 6 is shown, together with a closing bolt 44 on an operating rod 70. In this embodiment, the first flange 38 and the second flange 56 extend parallel to each other and parallel to the wall 2, at least to the wall profile parts 34, 36 and door profile parts 46, 48, the closing bolt 44 being somewhat hooked. In this instance it is also true that the sealing profile 66 is not interrupted by closing means, while the closing means 44 occupy substantially no space in the inner space 4 of the loading space.

It will be clear that the invention is not in any way limited to the exemplary embodiments represented in the description and the drawings. Many variations thereon are possible within the scope of the invention as outlined by the claims.

For instance, the first flange and/or second flange can be of a somewhat different design, for instance singly or doubly curved, while sealing profiles can be applied having a form adapted thereto. Also, the sealing profile can be fixed on the first flange, or sealing profiles can be provided both on the first and on the second flange. Naturally, the sealing profiles can be fixed in any desired, suitable manner. Instead of the integrated hinge parts shown, loose hinge parts can also be used. For obtaining a positive locking, the closing bolts can be slightly elastically biassed in the closed condition, so that an extra clamping force is obtained. Naturally, the posts and profiles can be mounted to wall panels and/or door panels in various different manners, for instance by gluing, screwing, profile parts received in grooves and the like. A loading space according to the invention is preferably applied with passenger cars and trucks, but may equally be used in different transport means or in stationarily arranged loading spaces such as containers and the like.

These and many comparable variations are understood to fall within the scope of the invention as outlined by the claims.

## Claims

1. A loading space, in particular for a vehicle, provided with a door for closing off an opening in a wall of the loading space, while on at least one side of the opening a post is arranged with a first flange extending at least in the direction of the opening, while, with the door in closed position, a sealing profile is received between the door and a first side of said first flange directed towards the door, the door being provided with at least one closing bolt which, from the door along said first flange and the sealing profile, engages on the side of the first flange remote from said sealing profile.

2. A loading space according to claim 1, wherein said post, at least said first flange, extends around the entire opening.

3. A loading space according to claims 1 or 2, wherein the door is provided with an edge profile having an outwardly extending second flange, such that between the first and the second flange said sealing profile can be received, while at least one of said flanges, at least on the side facing towards the door, preferably includes an angle with the plane of the wall.

4. A loading space according to claim 3, wherein the second flange, when the door is closed, extends at least substantially parallel to the first flange.

5. A loading space according to claims 3 or 4, wherein said second flange extends around approximately the entire circumference of the door.

6. A loading space according to any one of claims 3 - 5, wherein said angle is between 10 and 80 degrees, more in particular between 20 and 60 degrees, and preferably between 25 and 50 degrees.

7. A loading space according to any one of the preceding claims, wherein the door on a first side is pivotally connected to the wall through a number of hinges, while near the opposite side an operating rod extends along at least a part of the height of the door, to which operating rod a number of closing bolts is fixed, the operating rod being rotatable about its longitudinal axis with the aid of a handle, such that the closing bolts, as desired, can be hooked behind the first flange or can be pulled away therefrom.

8. A loading space according to claim 7, wherein the operating rod extends within the door.

9. A loading space according to claim 8, wherein the door is composed from at least a number of edge-forming first profile parts, which comprise the second flanges, which profile parts are provided around a plate part, at least the operating rod extending through one of the profile parts, while the profile parts are preferably manufactured by extrusion.

10. A loading space according to any one of the preceding claims, wherein the at least one closing bolt, at least when the door is closed, extends substantially between the outer side and the inner side of the wall.

11. A loading space according to any one of the preceding claims, wherein the or each closing bolt is constructed such that the door in the closed position is pulled against sealing profiles, such that the sealing profiles close off and seal around the door, while at least a part of the door is supported by the sealing profiles.

12. A door for use in a loading space according to any one of the preceding claims.

13. A vehicle, in particular a truck, provided with a loading space according to any one of claims 1 - 11, at least with a door according to claim 12.
